# EUROPÄISCHE PATENTSCHRIFT

(11) **EP 1 653 074 B1**
(45) Veröffentlichungstag und Bekanntmachung des Hinweises auf die Patenterteilung: **27.07.2016**
(21) Anmeldenummer: 05023366.7
(22) Anmeldetag: 26.10.2005
(51) Int. Cl.: F02K 7/18, F02C 7/04, F02K 7/10, F02K 9/97

(54) **Flugkörper mit Raketen-Staustrahltriebwerken**
Rocket-ramjet propelled missile
Missile propulsé par moteur fusée-statoréacteur

(30) Priorität: 29.10.2004 DE 102004052609
(43) Veröffentlichungstag der Anmeldung: 03.05.2006
(73) Patentinhaber: Bayern-Chemie Gesellschaft für flugchemische Antriebe mbH, 84544 Aschau a. Inn (DE)
(72) Erfinder: Böttger, Horst, 85604 Zorneding (DE); Engel, Herbert, 83052 Bruckmühl (DE); Tussiwand, Guiseppe, Dipl.-Ing., 84539 Ampfing (DE)
(74) Vertreter: LS-MP von Puttkamer Berngruber Loth Spuhler

(56) Entgegenhaltungen:
- EP-A2- 1 057 996
- DE-A1- 10 117 605
- US-A- 3 768 255
- US-A- 5 784 877

## Beschreibung

Die Erfindung bezieht sich auf einen Flugkörper mit einem Staustrahltriebwerk nach dem Oberbegriff des Anspruchs 1.

Derartige Flugkörper sind bekannt. Sie sind jedoch unter anderem wegen der Anordnung ihrer Luftkanäle und Lufteintrittsöffnungen nicht als an bemannte und unbemannte ankoppelbare Flugkörper einsetzbar. Auch lässt der Verbrennungswirkungsgrad der bekannten Flugkörper beim Marschflug zu wünschen übrig.

Ein Flugkörper gemäß dem Stand der Technik ist aus Dokument EP 1 057 996 A2 bekannt.

Aufgabe der Erfindung ist es, einen an bemannte oder unbemannte Flugzeuge ankoppelbaren Flugkörper mit hohem Verbrennungswirkungsgrad im Marschflug bereitzustellen.

Dies wird erfindungsgemäß durch den im Aspruch 1 gekennzeichneten Flugkörper erreicht. In den Unteransprüchen sind vorteilhafte Ausgestaltungen der Erfindung wiedergegeben.

Bei dem erfindungsgemäßen Flugkörper sind die Lufteintrittöffnungen hintereinander angeordnet und mit einem gemeinsamen, als Leiste ausgebildeten Verschlussdeckel verschließbar. Vorzugsweise sind zwei dicht nebeneinander liegende Reihen hintereinander angeordneter Lufteintrittsöffnungen vorgesehen, die jeweils mit einem Verschlussdeckel verschließbar sind. Die Luftkanäle können damit in einem begrenzten Winkelbereich des Flugkörpers angeordnet werden, d.h. der größte Teil des Umfangs des Flugkörpers kann unverändert bleiben, so dass den eingeschränkten geometrischen Verhältnissen, die zur Anbringung eines Flugkörpers an einem Flugzeug zur Verfügung stehen, mit dem erfindungsgemäßen Flugkörper ohne weiteres Rechnung getragen werden kann.

Der Flugkörper weist durch den Starttreibsatz in der Brennkammer ein integriertes Starttriebwerk auf, mit dem er während der Boost-Phase auf eine hohe Geschwindigkeit von beispielsweise über 2 Mach beschleunigt wird. Wenn der Starttreibsatz abgebrannt ist, muss durch das Marschtriebwerk umgehend weiterer Schub erzeugt werden. Der Brennkammer wird dazu ein brennstoffreiches Heißgas und als Oxidator Luft zugeführt. Zur Bildung des brennstoffreichen Heißgases kann der Brennkammer, die den Starttreibsatz aufnimmt, eine zweite Kammer vorgeordnet sein, die mit einem hochenergetischen Feststofftreibstoff versehen sein kann, aus dem das brennstoffreiche Heißgas für den Marschflug gebildet wird, wobei über die in Reihe hintereinander angeordneten Lufteintrittsöffnungen eine zur Verbrennung ausreichende Luftmenge zugeführt wird, so dass ein hoher Verbrennungswirkungsgrad sichergestellt wird.

Da der Flugkörper keine Bauteile abstoßen darf, die das Trägerflugzeug gefährden können, ist erfindungsgemäß der Verschlussdeckel an dem Brennkammergehäuse angelenkt. Damit verbleiben die geöffneten Verschlussdeckel während des Marschflugs in der Brennkammer, in der sie durch Abschmelzen und Verbrennen binnen weniger Sekunden aufgezehrt werden. Die dabei zusätzlich entstehende Abbrandenergie führt zu einer zeitweisen Erhöhung der Leistung des Triebwerks.

Während der Startphase entsteht in der Brennkammer ein hoher Innendruck von beispielsweise bis zu 200 bar. Dieser Druck muss von dem geschlossenen Verschlussdeckel aufgenommen werden. Dazu liegt der Verschlussdeckel mit seiner vom Brennraum abgewandten Außenseite auf den Stegen und der Innenwand des Brennkammergehäuses auf.

Der Starttreibsatz kühlt sich nach dem Eingießen in die Brennkammer ab, wodurch er erstarrt und schrumpft. Die Anbindungskräfte, die von dem geschrumpften Treibsatz auf den Verschlussdeckel ausgeübt werden, entsprechen einem beachtlichen Außendruck von beispielsweise 20 bar. Gleiches gilt für den spezifizierten Temperaturbereich, bei Lagerung und im Tragflug von z.B. - 40 °C und + 90 °C, da der plastische Treibsatz und die damit in Verbindung stehenden Metallstrukturen erheblich unterschiedliche wärmeausdehnungskoeffizienten haben. Auch dieser Druck muss von dem geschlossenen Verschlussdeckel aufgenommen werden. Erfindungsgemäß ist daher vorzugsweise der Verschlussdeckel im geschlossenen Zustand lösbar mit dem Brennkammergehäuse verbunden. Um ihn zu lösen, kann eine pyrotechnische Einrichtung vorgesehen sein, die die Verbindung trennt, aber auch beispielsweise eine am Verschlussdeckel befestigte Klinke, die zum Öffnen des Verschlussdeckels betätigt wird.

Damit der Verschlussdeckel während der Boost-Phase nicht schmilzt, bedeckt die thermische Isolationsschicht an der Brennkammerinnenwand auch den Verschlussdeckel. Zum Öffnen des Verschlussdeckels muss diese Isolatiorisschicht durchbrochen werden. Dazu ist erfiriduhgsgemäß vorzugsweise ein entsprechender Aktuator vorgesehen. Nach dem Aufbrechen der Isolationsschicht wird der Verschlussdeckel vorzugsweise durch einen weiteren Aktuator aufgestoßen.

Zur Erzeugung des brennstoffreichen Gases für den Marschflug kann z.B. ein hochenergetischer Feststofftreibsatz oder ein Flüssigbrennstoff vorgesehen sein.

Nachstehend sind Ausführungsformen des erfindungsgemäßen Flugköpers anhand der Zeichnung näher beschrieben. Darin zeigen:
- Figur 1: den Teil des Flugkörpers im Querschnitt, an dem die Luftkanäle vorgesehen sind;
- Figur 2: den Abschnitt A der Figur 1 in vergrößerter Wiedergabe;
- Figur 3: eine Teilansicht der Seite des Flugkörpers mit den Lufteintrittsöffnungen, wobei die Luftkanäle weggelassen sind;
- Figur 4: einen Verschlussdeckel in perspektivischer Wiedergabe;
- Figur 5: einen Teil des Flugkörpers im Längsschnitt;
- Figur 6 bis 11: den Teil eines Flugköpers im Querschnitt, an dem die Luftkanäle vorgesehen sind, nach jeweils einer anderen Ausführungsform; und
- Figur 12: eine Teilansicht der Seite des Flugkörpers mit den Lufteintrittsöffnungen nach einer weiteren Ausführungsform.

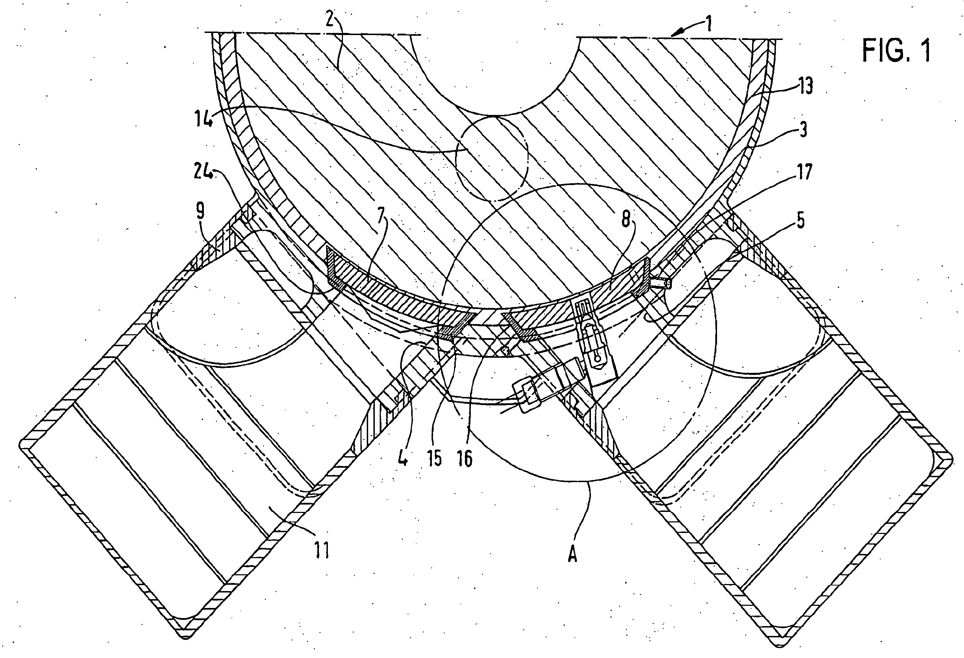

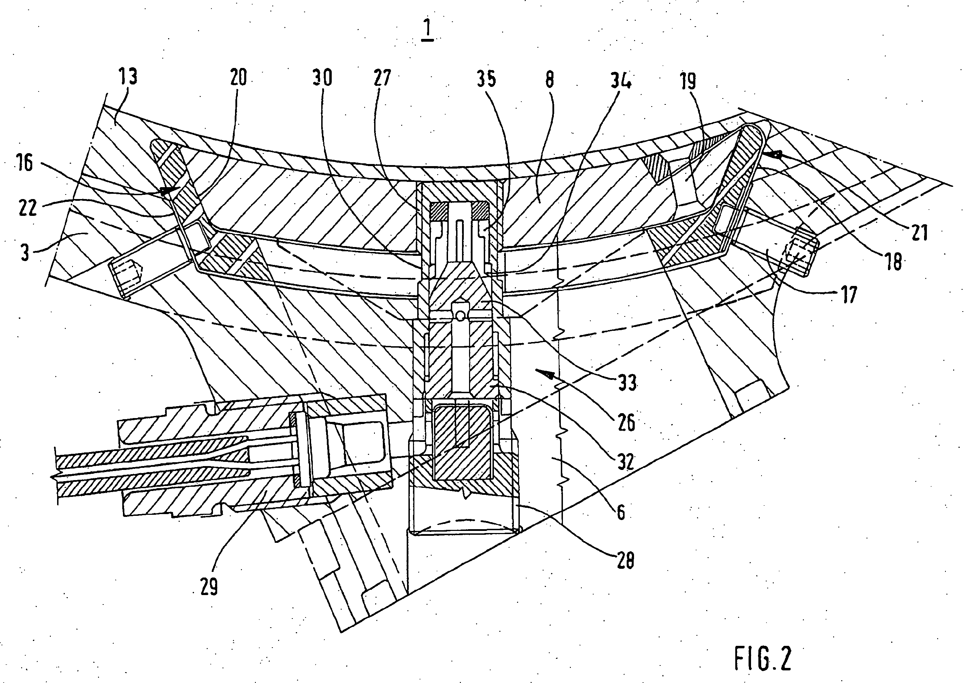

Gemäß Figur 1 und 2 ist die Brennkammer 1 eines Flugkörpers mit einem Starttreibsatz 2 versehen. Das zylindrische Brennkammergehäuse 3 weist Lufteintrittsöffnungen 4, 5 auf.

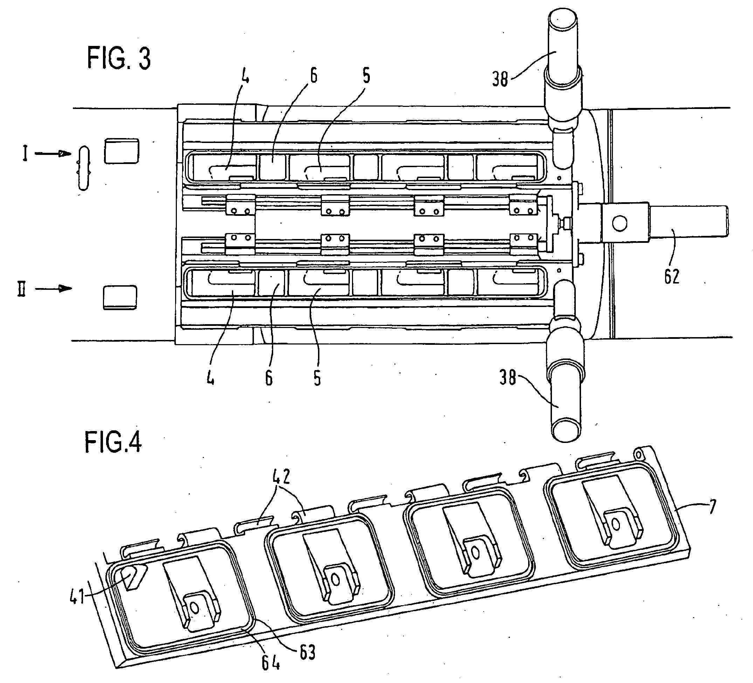

Wie in Figur 3 zu sehen, sind die Lufteintrittsöffnungen 4, 5 in zwei Reihen I und II hintereinander angeordnet, wobei die Eintrittsöffnungen 4, 5 jeder Reihe I, II durch Stege 6 voneinander getrennt sind.

Die Lufteintrittsöffnungen 4, 5 jeder Reihe I und II sind durch einen gemeinsamen Verschlussdeckel 7, 8 verschlossen, der, wie in Figur 4 dargestellt, leistenförmig ausgebildet ist.

Die Lufteintrittsöffnungen 4, 5 sind innerhalb von Stutzen 9 (Figur 1) vorgesehen, die einstückig mit dem Brennkammergehäuse 3 ausgebildet sind. An die Stutzen 9 schließen sich die Luftkanäle 11 an.

Die Innenseite des Brennkammergehäuses 3 ist mit einer thermischen Isolationsschicht 13 ausgekleidet, welche auch die Verschlussdeckel 7, 8 bedeckt. Der Treibsatz 2 liegt mit seinem zylindrischen Außenumfang vollflächig an der zylindrischen Isolationsschicht 13 an.

Nach dem Abbrennen des Starttreibsatzes 2, also nach der Boost-Phase des Flugkörpers, beginnt der Marschflug. Dazu wird der Brennkammer 1 über die in Figur 1 gestrichelt dargestellte Öffnung 14 in der Stirnwand der Brennkammer 1, die der nicht dargestellten Strahlaustrittsdüse gegenüberliegt, ein brennstoffreiches Heißgas zugeführt. Gleichzeitig werden die Verschlussdeckel 7, 8 geöffnet, um mit der über die Luftkanäle 11 durch die Lufteintrittsöffnungen 4, 5 in die Brennkammer 1 einströmenden Luft das brennstoffreiche Heißgas in der Brennkammer 1 zu verbrennen.

Um das Brennkammergehäuse 3 zu schützen, ist in das Gehäuse 3 um die Lufteintrittsöffnungen 4, 5 jeder Reihe I, II ein Rahmen 15, 16 aus einem hochtemperaturbeständigen Material eingebettet, auf dem der Verschlussdeckel 7, 8 aufliegt. Der Rahmen 15, 16 umläuft den gesamten Verschlussdeckel 7, 8 und hat nur Öffnungen im Bereich der Luftkanäle 11. Der Rahmen 15, 16 ist über mehrere als Stiftschrauben ausgebildete Bolzen 17 an dem Brennkammergehäuse 3 befestigt.

Die thermische Isolationsschicht 13 auf Silikonbasis mit ablativem Wärmeschutz gast aus und behindert dadurch den Wärmeeintrag. Die Rahmen 15, 16 bestehen vorzugsweise aus einem C-SiC)-Material, d.h. silizierter carbonfaserverstärkter Kohlenstoff.

Die beiden Verschlussdeckel 7, 8 sind an ihren voneinander abgewandten Längsseiten an das Brennkammergehäuse 3 angelenkt. Dazu ist gemäß Figur 2 ein Federband 18 vorgesehen, das an dem Brennkammergehäuse 3 mit den Bolzen 17 befestigt ist. Die Befestigung des Federbandes 18 an dem Verschlussdeckel 7, 8 erfolgt mit einer Schraube 19 oder Nieten.

Um den hohen Innendruck der Brennkammer 1 beim Abbrand des Treibsatzes 2 aufzunehmen, stützt sich der Verschlussdeckel 7, 8 mit seinem von der Brennkammer 1 abgewandten Randbereich 20 über den Rahmen 15, 16 auf der Innenseite des Brennkämmergehäuses 3 ab.

Dazu verjüngt sich der Randbereich 20 des Verschlussdeckels 7, 8 keilförmig zu dem Luftkanal 11 hin. Die Ausnehmung 21 in dem Brennkammergehäuse 3, in die der Rahmen 15, 16 eingebentet ist, weist gleichfalls keilförmige Seitenwände 22 auf, so dass sich der Randbereich 20 des Verschlussdeckels 7, 8 mit seinen schrägen Keilflächen über den Rahmen 15, 16 auf den schrägen Keilflächen 22 der Ausnehmung 21 abstützt. Zugleich stützt sich der Verschlussdeckel 7, 8 an dem Radbereich 20 mit seiner dem Luftkanal 11 zugewandten Außenseite auf einer durch die Ausnehmung 21 gebildeten Stufe 24 über den Rahmen 15, 16 auf dem Brennkammergehäuse 3 ab.

Gemäß Figur 1 und 2 sind mit einem ungleich größeren Auflageradius der Verschlussdeckel 7, 8 gegenüber dem Radius des Brennkammergehäuses 3 erhebliche Verformungen am Brennkammergehäuse 3 bei hohem Innendruck vorgegeben.

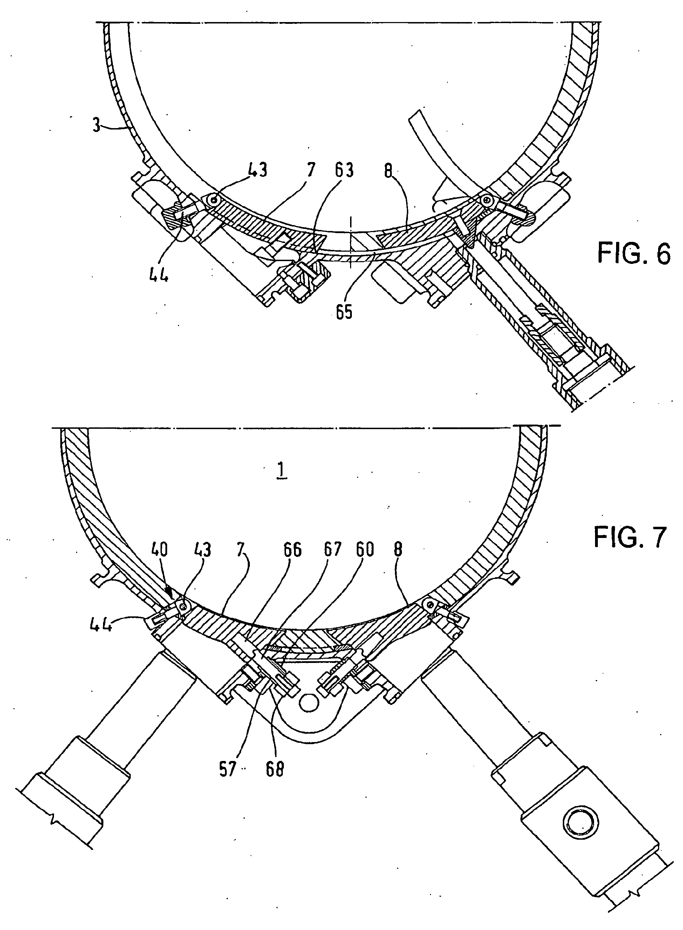

Gemäß Figur 6 ist der Verschlussdeckel 7, 8 im Querschnitt kreisbogenförmig ausgebildet, und zwar auflageseitig mit einem Kreis, der den gleichen Mittelpunkt und Radius wie der Durchmesser des Brennkammergehäuses 3 besitzt. Damit liegen die Verschlussdeckel 7, 8 und das Brennkammergehäuse 3, einschließlich der Stege 6, auf ein und demselben Großkreis. Dadurch wird Verformungen des Brennkammergehäuses 3 und der Verschlussdeckel 7, 8 durch den hohen Innendruck in der Brennkammer 1 entgegengewirkt. In Figur 7 ist ein Hitzeschild gleicher Wandstärke eingefügt; um diese reduziert sich der Radius der Verschlussdeckel 7, 8.

Wenn der Treibsatz 2 mit hoher Temperatur in die Brennkammer 1 gegossen wird und dann abkühlt und schrumpft, wirken auf den Verschlussdeckel 7, 8 hohe Anbindungskräfte, die einem Außendruck von beispielsweise 20 bar entsprechen. Gleiches gilt für den spezifizierten Temperaturbereich, bei Lagerung und im Tragflug von z.B. - 40 °C und + 90 °C, da der plastische Treibsatz und die damit in Verbindung stehenden Metallstrukturen erheblich unterschiedliche Wärmeausdehnungskoeffizienten haben. Es ist deshalb notwendig, den Verschlussdeckel 7, 8 mit dem Brennkammergehäuse 3 zu verbinden, allerdings lösbar, um den Verschlussdeckel 7, 8 für den Marschflug öffnen zu können.

Gemäß Figur 2 ist dazu eine Schraube 26 vorgesehen, die mit ihrem Gewinde 27 in eine Bohrung in dem Verschlussdeckel 8 geschraubt ist. Die Verschlussschraube 28 nimmt eine pyrotechnische Beiladung 31 auf und verschließt die Bohrung.

Die Schraube 26 ist mit einer pyrotechnischen Einrichtung trennbar ausgebildet. Dazu befeuert ein elektrischer pyrotechnischer Zünder 29 eine pyrotechnische Beiladung 31 in der Schraube 26, die auf einen Hubkolben 32 wirkt, der in der Schraube 26 geführt ist. Der Kolben 32 weist einen konisch verjüngten Endabschnitt 33 auf, der den aufspreizbaren Schneidring 34 einer spannzangenartigen Hülse 35 nach außen drückt, wenn der Hubkolben 32 betätigt wird. Der Schneidring 34 durchtrennt dadurch die Rohrstruktur 30 der Schraube 26, wodurch die Schraube 26 im Bereich der Rohrstruktur 30 reißt. Der Zünder 29 gewährleistet eine zeitlich punktgenaue Funktion.

Wenn die Schraube 26 durchtrennt und damit die Verbindung zwischen dem Verschlussdeckel 8 und dem Brennkammergehäuse 3 gelöst ist, tritt ein Aktuator in Aktion, der die Isolationsschicht 13 aufbricht, die den Verschlussdeckel 7, 8 bedeckt, und dann ein Aktuator, der den Verschlussdeckel 7, 8 in die Brennkammer 1 hinein aufstößt.

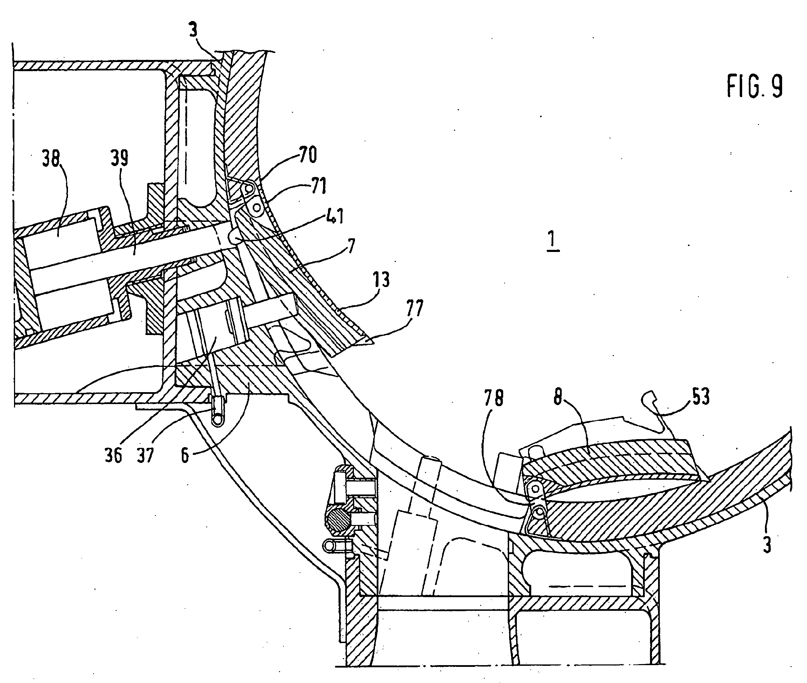

Wie aus Figur 9 ersichtlich, wird der Aktuator zum Aufbrechen der Isolationsschicht 13 durch einen oder mehrere Losbrech-Hubzylinder 36 gebildet, der an dem Endabschnitt des Verschlussdeckels 7, 8 angreift, der der Längsseite gegenüberliegt, mit der der Verschlussdeckel 7, 8 an dem brennkammergehäuse 3 angelenkt ist. Der Losbrech-Hubzylinder 36 ist am Steg 6 angeordnet.

Das Druckgas für den Losbrech-Hubzylinder 36 wird über eine Leitung 37 von einem nicht dargestellten zentralen pyrotechnischen Gaserzeuger geliefert.

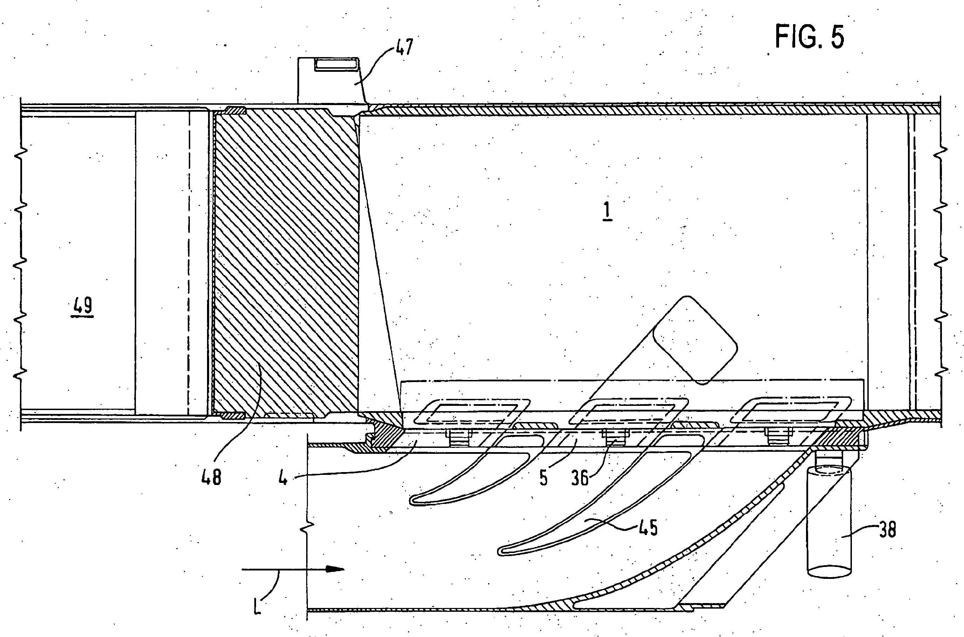

Wie aus Figur 9 ersichtlich, wird der Aktuator zum Aufstoßen der Verschlussdeckel 7, 8 ebenfalls durch einen Hubzylinder 38 gebildet. Der Öffnungs-Hubzylinder 38, der gleichfalls von dem erwähnten pyrotechnischen Gaserzeuger mit Druckgas beaufschlagt wird, greift mit seiner Kolbenstange 39 an einem Nocken 41 am Verschlussdeckel 7, 8 an. Der Öffnungs-Hubzylinder 38 ist am Brennkammergehäuse 3 befestigt und beispielsweise auch in Figur 3 und 5 zu sehen, der Nocken 41 beispielsweise auch in Figur 4.

Figur 4 zeigt zudem einen Verschlussdeckel 7, der mit einem Drehgelenk oder Scharnier am Brennkammergehäuse 3 angelenkt ist. Gemäß Figur 4 weist der Verschlussdeckel 7 dazu rinnenförmige Gelenkpfannen 42 auf, die eine Gelenkstange 43 (Figur 6) abwechselnd von der einen und der anderen Seite umgreifen. Die Gelenkstange 43 ist in Drehlagerbolzen 44 gelagert, die in das Brennkammergehäuse 3 eingeschraubt sind (Figur 6). Die Drehlagerbolzen 44 greifen zwischen den rinnenförmigen Gelenkpfannen 42 ein, die dazu in Längsrichtung im Abstand voneinander angeordnet sind.

Figur 5 zeigt, dass der am Brennkammergehäuse 3 befestigte Hauptkanal, in den die Luft beim Flug gemäß dem Pfeil L von vorne einströmt, durch die bogenförmigen Zwischenwände 45 in den einzelnen Luftkanälen 11 zu den Lufteintrittsöffnungen 4, 5 strömt.

Ferner ist in Figur 5 der Lasthaken 47 der Hängeeinrichtung zu sehen, mit der der Flugkörper an einem Trägerflugzeug angekoppelt wird. Weiterhin ist zu sehen, dass der Brennkammer 1, getrennt durch einen Abschnitt 48, eine weitere Kammer 49 vorgelagert ist, die z.B. den Festtreibstoff zur Erzeugung des brennstoffreichen Heißgases für den Marschflug enthalten kann. Auch sind in Figur 5 die Losbrech-Zylinder 36 an den Stegen 6 zu sehen, ferner der Öffnungs-Zylinder 38.

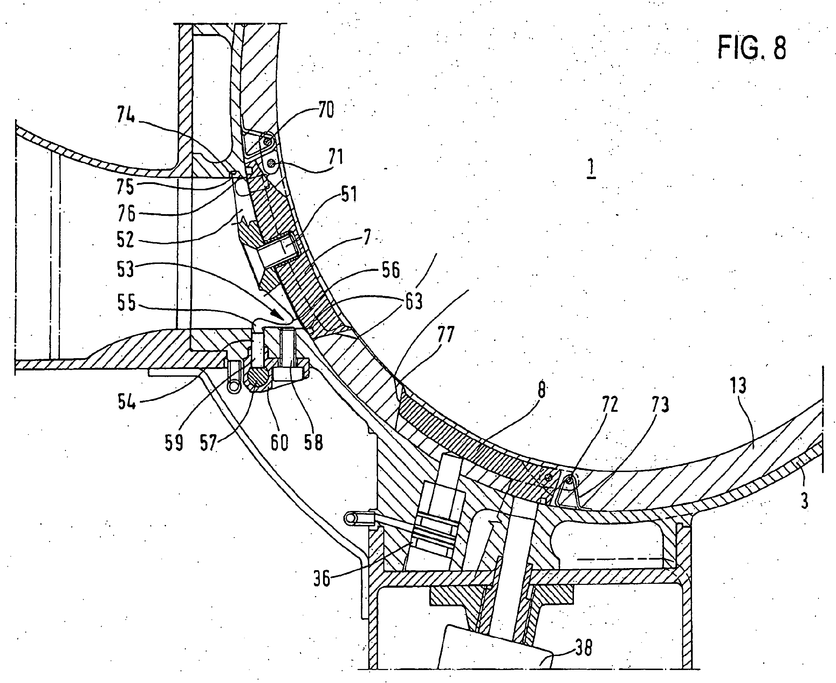

In Figur 6, 8, 9, 10 und 12 ist eine andere Ausführungsform dargestellt, um die Verschlussdeckel 7, 8 lösbar mit dem Brennkammergehäuse 3 zu verbinden. Dazu ist, wie in Figur 8 ersichtlich, an dem Verschlussdeckel 7 mit einer Schraube 51 eine Brücke 52 befestigt, die an der Längsseite, die der Längsseite gegenüberliegt, mit der der Verschlussdeckel 7 angelenkt ist, eine Klinke 53 aufweist, die mit einem hakenförmigen Abschnitt 55 in eine durch eine Bohrung in dem Brennkammergehäuse 3 gebildete Ausnehmung 54 federnd eingreift. Zum federnden Eingriff weist die Klinke 53 zwischen dem Hakenabschnitt 55 und dem Verschlussdeckel 7 einen verjüngten gekrümmten Federabschnitt 56 auf.

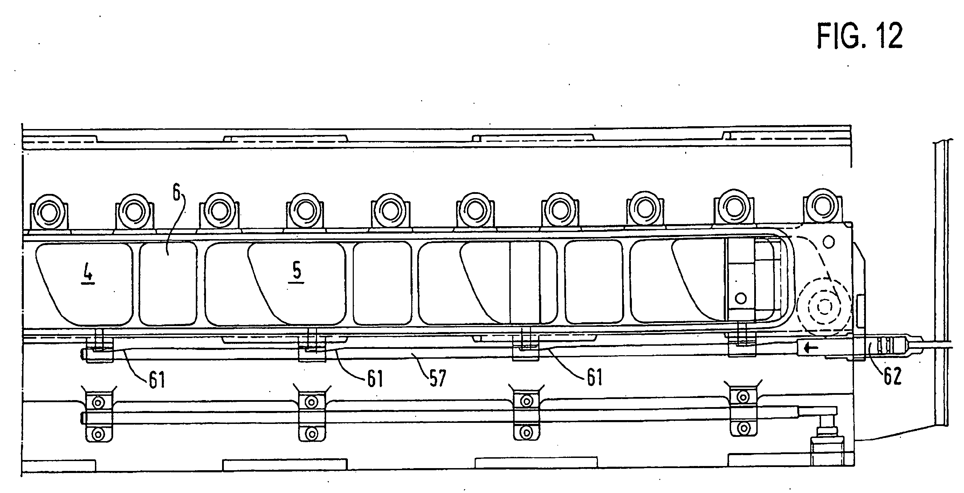

Zur Betätigung der Klinke 53 ist ein Steuergestänge 57 vorgesehen, das am Brennkammergehäuse 3 in mit Schrauben 58 befestigten Führungslagerteilen 60 geführt ist und über einen in der Bohrung 55 verschiebbaren Stift 59 die Klinke 53 betätigt. Das Steuergestänge 57 weist dazu Steuerkurven 61 auf, die in Figur 12 zu sehen sind.

Zur Betätigung des Steuergestänges 57 ist ein Arbeitszylinder 62 vorgesehen. Dabei kann, wie in Figur 12 dargestellt, für jedes Steuergestänge 57 einer Reihe I, II von Lufteintrittsöffnungen 4, 5 ein separater Arbeitszylinder 62 oder gemäß Figur 3 für die beiden Steuergestänge 57 beider Reihen I, II ein gemeinsamer Arbeitszylinder 62 vorgesehen sein.

Gemäß Figur 4, 6 und 8 ist an dem Verschlussdeckel 7, 8 aus Leichtmetall im Bereich jeder Lufteintrittsöffnung 4, 5 ein umlaufender Dichtring 63 in einer Nut 64 angeordnet. Die Dichtringe 63 haben die Aufgabe, unterschiedlichen Verformungen der in Kontakt stehenden Bauteile, also des Brennkammergehäuses 3 und der Verschlussdeckel 7, 8, bei hohen Brennkammertemperaturen und -drücken zu begegnen.

Für einen weiteren Hitzeschutz ist an der Innenseite des Brennkammergehäuses 3 als Hitzeschild eine thermische Isolationsschicht 65 aus C-SiC vorgesehen. Die Isolationsschicht, auf der der Verschlussdeckel 7, 8 aufliegt, wird mit dem Lagerbolzen 44 gehalten (Figur 6).

Bei der Ausführungsform nach Figur 7 wird die Klinke durch einen Bolzen 66 gebildet, der in Eingriff mit einem im Brennkammergehäuse 3 verschiebbar gelagerten Riegel 67 steht. Während der Verschlussdeckel 7, 8 in Leichtmetall ausgeführt ist, weist der in den Verschlussdeckel 7, 8 eingepresste konische Bolzen 66 eine höhere Materialfestigkeit auf. Der Bolzen 66 wird von dem Riegel 67 auf der der Brennkammer zugewandten Seite übergriffen.

Zur Federbelastung ist auf dem Riegel 67 ein Federpaket 68 aufgesetzt, das den Riegel 67 in Außereingriffstellung belastet. Das Steuergestänge 57, das in dem Lagerteil 60 geführt ist, hält den Riegel 67 in Eingriff und gibt ihn durch Längshub frei.

Außer dem mit dem Riegel 57 in Eingriff stehenden Bolzen 66 wird der Verschlussdeckel durch die Gelenkstange 43, die mit. Lagerbolzen 44 am Brennkammergehäuse 3 fixiert ist, gehalten.

Gemäß Figur 8 sind die Verschlussdeckel 7, 8 jeweils mit einem Doppeldrehgelenk 70, 71 am Brennkammergehäuse 3 angelenkt. Die Gelenkstange 72 des Gelenks 70 ist dabei mit einem Lagerblech 73 beispielsweise durch Anschweißen an dem Brennkammergehäuse 3 befestigt.

Bei dem in Figur 8 links dargestellten Verschlussdeckel 7 ist dabei an der Längsseite, an der er angelenkt ist, die Brücke 52 mit einem Vorsprung 74 versehen, der in eine Nut 75 in dem Brennkammergehäuse 3 eingreift. Die der Brennkammer 1 zugewandte Nutwand 76 und die daran anliegende Fläche des Vorsprungs 74 erstrecken sich zum Luftkanal 11 hin kreisbogenförmig in Richtung der Brennkammer 1. Der Kreismittelpunkt der kreisbogenförmigen Nutwand 76 und der daran anliegenden Fläche des Vorsprungs 74 entspricht dem Drehpunkt des Verschlussdeckels 7 beim Öffnen desselben. D.h. während der ersten Öffnungsphase mit dem Losbrech-Zylinder 36 befindet sich der Drehpunkt des Verschlussdeckels 7 im Mittelpunkt des Kreisbogens der Nutwand 76, wodurch durch die Hebelverhältnisse ein hohes Öffnungsmoment erzielt wird.

Durch das Doppeldrehgelenk 70, 71 hat der Verschlussdeckel 7, 8 im weiteren Funktionsverlauf weniger Verformungsarbeit zu leisten, da er vollständig aus der thermischen Isolierschicht 13 herausgehoben wird, wie in Figur 9 dargestellt.

Da die thermische Isolierschicht 13 eine kompakte Formfestigkeit besitzt, die beim Öffnen der Verschlussdeckel 7, 8 zu überwinden ist, sind die Deckel 7, 8 an der von dem Doppeldrehgelenk 70, 71 abgewandten Längsseite mit zahnförmigen Vorsprüngen 77 zum Durchtrennen der thermischen Isolationsschicht 13 versehen.

Wenn gemäß Figur 9 der Losbrech-Zylinder 36 seinen Hub vollständig ausgeführt hat, erfolgt die weitere Öffnung der Lufteintrittsöffnungen 4, 5 mit dem Öffnungs-Zylinder 38, der mit seiner Kolbenstange 39 an dem Nocken 41 an dem Verschlussdeckel 7, 8 angreift. Durch den Nocken 41 soll dabei ein möglichst großer Öffnungswinkel des Verschlussdeckels 7, 8 gewährleistet werden. Dieser Öffnungswinkel hat Einfluss auf den Verbrennungswirkungsgrad in der Brennkammer 1, und zwar in der Anfangsphase, in der die Verschlussdeckel 7, 8, die aus Leichtmetall, beispielsweise einer Aluminiumlegierung bestehen, aufgezehrt werden.

Durch das Doppeldrehlager 70, 71 dreht sich der Deckel 7, 8 um das Drehgelenk 70 oder 71 des Doppeldrehgelenks, je nachdem, wo zum Zeitpunkt das niedrigere Gegenmoment der thermischen Isolationsschicht 13 anliegt. Das als Hebel ausgebildete Verbindungsglied 78 zwischen den beiden Drehgelenken 70, 71 des Doppeldrehgelenks ermöglicht ein vollständiges Herausheben des Verschlussdeckels 7, 8 aus der thermischen Isolationsschicht 13 und damit eine Öffnung des Verschlussdeckels 7, 8 bis zur Anlage an der Isolationsschicht 13, wie in Figur 9 gezeigt, wodurch der Verbrennungswirkungsgrad erhöht wird.

Die filigraneren Bauteile, also das Verbindungsglied 78 und das Lagerblech 73, sind durch die Isolationsmasse 13 geschützt. Dadurch wird der Gefahr begegnet, dass diese Bauteile, die den geöffneten Verschlussdeckel 7, 8 in der Brennkammer 1 halten sollen, abschmelzen können, bevor der Verschlussdeckel 7, 8 durch Schmelze oder Verbrennen aufgezehrt wird. Eine Gefährdung des Trägerflugzeugs durch die Verschlussdeckel 7, 8 oder Teile davon wird damit verhindert.

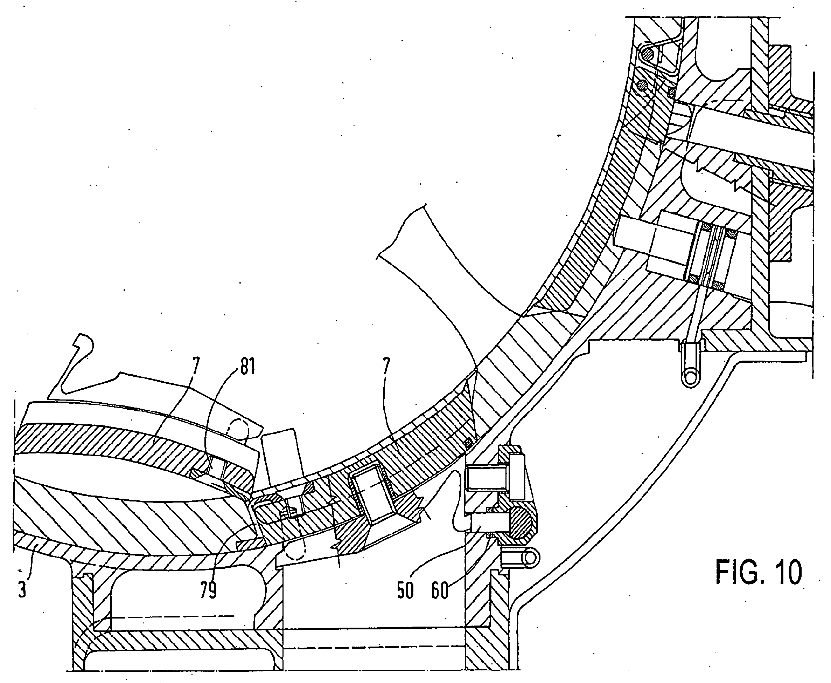

Die Ausführungsform nach Figur 10 unterscheidet sich von der nach Figur 8 und 9 im Wesentlichen dadurch, dass das Doppeldrehgelenk 70, 71 durch ein Blechbiegeteil 79 ersetzt ist, das mit dem Verschlussdeckel 7, 8, wie bei dem linken Deckel 7 in Figur 10 zu sehen, mit einer Schraube 81 verschraubt ist, während das andere Ende des Blechbiegeteiles 79 beispielsweise durch Anschweißen an dem Brennkammergehäuse 3 befestigt ist. Das Blechbiegeteil 79 ist so dimensioniert, dass es durch die Kräfte des Losbrech-Zylinders 36 und des Öffnungs-Zylinders 38 verformt werden kann.

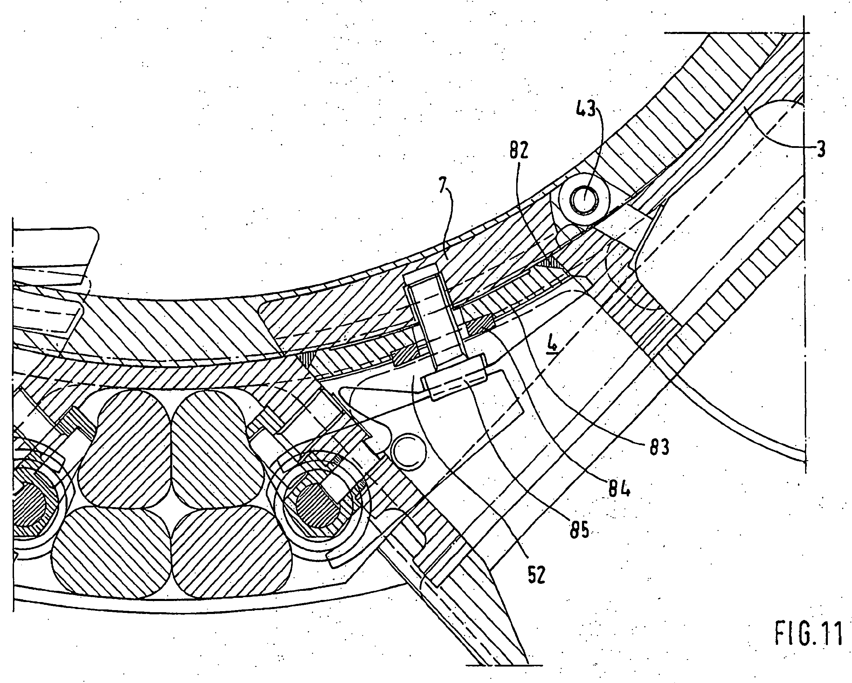

Bei der Ausführungsform nach Figur 11 liegt der Verschlussdeckel 7 auf der zylindrischen Innenseite des Brennkammergehäuses 3 auf. Die Auflagefläche ist auf das Maß der Materialfestigkeit reduziert und der umlaufende Dichtring 82 in der Lufteintrittsöffnung 4 vorgesehen. Damit erfolgt über die blanken Auflageflächen ohne thermische Isolation durch die Strahlungswärme ein erheblicher Wärmeeintrag in das Brennkammergehäuse 3. Um Undichtigkeiten bei Spaltbildung durch Verformung zu begegnen, ist zwischen der Brücke 52 und dem Verschlussdeckel 7 eine entsprechend der Brücke 52 und dem Verschlussdeckel 7 gekrümmte Platte 83 vorgesehen, wobei der Dichtring 82 an der dem Verschlussdeckel 7 zugewandten Kante der Platte 83 angeordnet ist. Die Platte 83 und damit der Dichtring 82 werden durch Tellerfedern 84 zwischen der Brücke 52 und der Platte 83 gegen den Verschlussdeckel 7 und das Brennkammergehäuse 3 an der Lufteintrittsöffnung 4 gedrückt. Die Brücke 52 und der Verschlussdeckel 7 sind über Schrauben 85 verspannt, die die Tellerfedern 84 durchsetzt. Bei dieser Ausführungsform ist das Drehlager mit der Gelenkstange 43 als Fanglager ausgebildet, d.h. um den Verschlussdeckel 7, 8 nach dem Öffnen in der Brennkammer 1 festzuhalten, und nicht als Lastlager, also zur Aufnahme der auf den Verschlussdeckel 7, 8 wirkenden Kräfte.

Gemäß Figur 7, 8 und 10 wird der Stift 50 gegenüber dem Brennkammergehäuse 3 durch einen Dichtring 60 abgedichtet. Der Arbeitszylinder 62 (Figur 12) wird ebenfalls von dem Druckgas des nicht dargestellten zentralen Gaserzeugers beaufschlagt.

## Patentansprüche

1. Flugkörper mit einem Staustrahltriebwerk mit einer an der Innenseite mit einer thermischen Isolationsschicht (13) ausgekleideten Brennkammer (1), in der beim Start ein Starttreibsatz (2) abgebrannt wird und der beim Marschflug ein brennstoffreiches Gas und über Luftkanäle (11) Luft zugeführt wird, wobei die Luftkanäle (11) mit einem sich in die Brennkammer (1) öffnenden Verschlussdeckel (7, 8) an der Lufteintrittsöffnung (4, 5) des Brennkammergehäuses (3) versehen sind, wobei das Brennkammergehäuse (3) hintereinander angeordnete, durch Stege (6) getrennte Lufteintrittsöffnungen (4, 5) aufweist, die durch einen gemeinsamen, als Leiste ausgebildeten Verschlussdeckel (7, 8) verschließbar sind und wobei zwei oder mehr Reihen (I, II) hintereinander angeordneter Lufteintrittsöffnungen (4, 5) vorgesehen sind und der Verschlussdeckel (7, 8) an einer Längsseite an das Brennkammergehäuse (3) angelenkt ist.

2. Flugkörper nach Anspruch 1, wobei der Verschlussdeckel (7, 8) mit einem Federband (18) an dem Brennkammergehäuse (3) angelenkt ist.

3. Flugkörper nach Anspruch 2, wobei das Federband (18) mit einem Bolzen (17) an dem Brennkammergehäuse (3) befestigt ist.

4. Flugkörper nach Anspruch 1, wobei der Verschlussdeckel (7, 8) mit einem Drehgelenk (40) an dem Brennkammergehäuse (3) angelenkt ist.

5. Flugkörper nach Anspruch 4, wobei das Drehgelenk (40) eine Gelenkstange (43) aufweist, die am Brennkammergehäuse (3) befestigt ist und abwechselnd von einer und der anderen Seite von rinnenförmigen Gelenkpfannen (42) an dem Verschlussdeckel (7, 8) umgriffen wird.

6. Flugkörper nach Anspruch 5, wobei die Gelenkpfannen (42) in Längsrichtung im Abstand voneinander angeordnet sind.

7. Flugkörper nach Anspruch 4 oder 5, wobei die Gelenkstange (43) in Drehlagerbolzen (44) gelagert ist, die an dem Brennkammergehäuse (3) befestigt sind.

8. Flugkörper nach Anspruch 4, wobei das Drehgelenk (40) als Doppeldrehgelenk (70, 71) ausgebildet ist.

9. Flugkörper nach Anspruch 8, wobei das eine Drehgelenk (70) des Doppeldrehgelenks an dem Brennkammergehäuse (3) befestigt und über ein Verbindungsglied (78) mit dem anderen an dem Verschlussdeckel (7, 8) befestigten Drehgelenk (71) verbunden ist.

10. Flugkörper nach Anspruch 1, wobei der Verschlussdeckel (7, 8) mit seinem von der Brennkammer (1) abgewandten Randbereich (20) sich auf der Innenseite des Brennkammergehäuses (3) abstützt.

11. Flugkörper nach Anspruch 10, wobei der Verschlussdeckel (7, 8) auf einer thermischen Isolationsschicht (65) aus hochtemperaturfestem Material an der Innenseite des Brennkammergehäuses (3) aufliegt.

12. Flugkörper nach Anspruch 10 oder 11, wobei an der Innseite des Brennkammergehäuses (3) um die Lufteintrittsöffnungen (4, 5) ein Rahmen (15, 16) aus einem hochtemperaturbeständigen Material eingebettet ist, auf dem der Verschlussdeckel (7, 8) aufliegt.

13. Flugkörper nach Anspruch 3 und 12, wobei der Rahmen (15, 16) mit den Bolzen (17) befestigt ist, mit denen das Federband (18) am Brennkammergehäuse (3) befestigt ist.

14. Flugkörper nach Anspruch 10, wobei sich der Randbereich (20) des Verschlussdeckels (7, 8) zum Luftkanal (11) hin keilförmig verjüngt.

15. Flugkörper nach Anspruch 14, wobei der keilförmige Randbereich (20) sich an den keilförmigen Seitenwänden (22) in einer Ausnehmung (21) des Brennkammergehäuses (3) abstützt.

16. Flugkörper nach Anspruch 10, wobei der Verschlussdeckel (7, 8) einen Dichtring (63) aufweist, mit dem er auf der Innenseite des Brennkammergehäuses (3) aufliegt.

17. Flugkörper nach Anspruch 1, wobei der Verschlussdeckel (7, 8) im Querschnitt kreisbogenförmig ausgebildet ist und sein Auflageradius mit dem Brennkammergehäuse (3) auf einem Großkreis liegt.

18. Flugkörper nach Anspruch 1, wobei die thermische Isolationsschicht (13) an der Innenseite des Brennkammergehäuses (3) den Verschlussdeckel (7, 8) bedeckt und ein Aktuator vorgesehen ist, der die Isolationsschicht (13) im Bereich des Verschlussdeckels (7, 8) aufbricht.

19. Flugkörper nach Anspruch 1 und 18, wobei der Aktuator an dem vom Gelenk (40) abgewandten Endabschnitt an dem Verschlussdeckel (7, 8) angreift.

20. Flugkörper nach Anspruch 19, wobei der Aktuator im Bereich der Stege (6) zwischen den Lufteintrittsöffnungen (4, 5) angeordnet ist.

21. Flugkörper nach Anspruch 18 bis 20, wobei der Aktuator durch einen Losbrech-Hubzylinder (36) gebildet wird.

22. Flugkörper nach Anspruch 1, wobei ein Aktuator zum Öffnen des Verschlussdeckels (7, 8) vorgesehen ist.

23. Flugkörper nach Anspruch 20, wobei der Aktuator an den Enden des leistenförmigen Verschlussdeckels (7, 8) am Brennkammergehäuse (3) vorgesehen ist.

24. Flugkörper nach Anspruch 22 oder 23, wobei der Aktuator durch einen Öffnungs-Hubzylinder (38) gebildet wird.

25. Flugkörper nach Anspruch 24, wobei der Öffnungs-Hubzylinder (38) mit seiner Kolbenstange (39) an einem Nocken (41) am Verschlussdeckel (7, 8) angreift.

26. Flugkörper nach Anspruch 1, wobei an der der angelenkten Längsseite gegenüberliegenden Längsseite des Verschlussdeckels (7, 8) zahnförmige Vorsprünge (77) zum Durchtrennen der thermischen Isolationsschicht (13) vorgesehen sind.

27. Flugkörper nach Anspruch 1 mit einer Einrichtung, mit der der Verschlussdeckel (7, 8) im geschlossenen Zustand lösbar mit dem Brennkammergehäuse (3) verbunden ist.

28. Flugkörper nach Anspruch 27, wobei die Einrichtung zur lösbaren Verbindung des Verschlussdeckels (7, 8) pyrotechnisch betätigbar ist.

29. Flugkörper nach Anspruch 28, wobei die lösbare Verbindung durch eine Schraube (26) gebildet wird, die mit einer pyrotechnischen Ladung (31) durchtrennbar ist.

30. Flugkörper nach Anspruch 29, wobei in der Schraube (26) ein Kolben (32) geführt ist, der an seinem von der pyrotechnischen Ladung (31) abgewandten verjüngten Endabschnitt (33) in einen aufspreizbaren Schneidring (34) zum Durchtrennen eines rohrförmigen Abschnitts (30) der Schraube (26) drückbar ist.

31. Flugkörper nach Anspruch 29 oder 30, wobei die Schraube (26) den Steg (6) zwischen den Lufteintrittsöffnungen (4, 5) mit dem Verschlussdeckel (7, 8) verbindet.

32. Flugkörper nach Anspruch 27, wobei die Einrichtung zur lösbaren Verbindung des Verschlussdeckels (7, 8) durch eine am Verschlussdeckel (7, 8) befestigte Klinke (53) gebildet wird.

33. Flugkörper nach Anspruch 1 und 32, wobei die Klinke (53) an der der angelenkten Längsseite gegenüberliegenden Längsseite des Verschlussdeckels (7, 8) vorgesehen ist.

34. Flugkörper nach Anspruch 32 oder 33, wobei die Klinke (53) in eine Ausnehmung (54) im Brennkammergehäuse (3) in Eingriffsstellung federbelastet ist.

35. Flugkörper nach Anspruch 32, wobei die Klinke (53) durch einen am Verschlussdeckel (7, 8) befestigten Bolzen (66) gebildet wird, der mit einem im Brennkammergehäuse (3) verschiebbar gelagerten federbelasteten Riegel (67) in Eingriff steht.

36. Flugkörper nach Anspruch 33, wobei die Klinke (53) mit einem entlang der Längsseite des Verschlussdeckels (7, 8) am Brennkammergehäuse (3) geführten Steuergestänge (57) betätigbar ist.

37. Flugkörper nach Anspruch 36, wobei das Steuergestänge (57) durch einen Arbeitszylinder (62) betätigbar ist.

38. Flugkörper nach Anspruch 36 oder 37, wobei das Steuergestänge (57) in wenigstens einem an der Außenseite des Brennkammergehäuses (3) befestigten Lagerteil (60) geführt ist.

39. Flugkörper nach Anspruch 36, wobei das Steuergestänge (57) Steuerkurven (61) zur Betätigung der Klinke (53) aufweist.

40. Flugkörper nach Anspruch 36 oder 39, wobei die Klinke (53) über einen in dem Brennkammergehäuse (3) verschiebbar geführten Stift (59) durch das Steuergestänge (57) betätigbar ist.

41. Flugkörper nach Anspruch 33, wobei der Verschlussdeckel (7, 8) an der Längsseite, mit der er angelenkt ist, einen Vorsprung (74) aufweist, der in einer Nut (75) in dem Brennkammergehäuse (3) gelagert ist, wobei die der Brennkammer (1) zugewandte Nutwand (76) und die daran anliegende Fläche des Vorsprungs (74) sich zum Luftkanal (11) hin in Richtung der'Brennkammer (1) zu erstrecken.

42. Flugkörper nach Anspruch 41, wobei die Nutwand (76) und die daran anliegende Fläche des Vorsprungs (74) kreisbogenförmig gekrümmt sind, wobei der Kreismittelpunkt im Bereich des Drehgelenks liegt.

43. Flugkörper nach Anspruch 32, wobei die Klinke (53) an einer am Verschlussdeckel (7, 8) befestigten Brücke (52) vorgesehen ist.

44. Flugkörper nach Anspruch 43, wobei zwischen der Brücke (52) und dem Verschlussdeckel (7, 8) eine Platte (83) vorgesehen ist, welche durch sich an der Brücke (52) abstützende Federn (84) gegen den Verschlussdeckel (7, 8) und das Brennkammergehäuse (3) an der Lufteintrittsöffnung (4, 5) gedrückt wird.

45. Flugkörper nach einem der Ansprüche 21, 24 oder 37, wobei der Losbrech-Hubzylinder (36), der Öffnungs-Hubzylinder (38) und/oder der Arbeitszylinder (62) mit einem pyrotechnisch erzeugten Gas betätigbar sind.

46. Flugkörper nach Anspruch 45 mit einem gemeinsamen Gaserzeuger für das pyrotechnisch erzeugte Gas.

47. Flugkörper nach Anspruch 11 oder 12, wobei die Isolationsschicht (15, 16 und 65) und/oder das hochtemperaturbeständige Material aus C-SiC besteht.

## Claims

1. Missile including a ramjet engine with a combustion chamber (1) lined with a thermal insulation layer (13) on the inside in which a starting propellant charge (2) is combusted during launch and to which, during cruise flight, propellant-rich gas is supplied as well as air via air ducts (11), wherein, at the air inlet opening (4, 5) of the combustion chamber housing (3), the air ducts (11) are provided with a sealing cover (7, 8) opening into the combustion chamber (1), wherein the combustion chamber housing (3) has air inlet openings (4, 5) arranged one behind the other and separated by webs (6) which are lockable by means of a common sealing cover (7, 8) configured in the form of a strip, and wherein two or more rows (I, II) of air inlet openings (4, 5) arranged one behind the other are provided and the sealing cover (7, 8) is hinged to the combustion chamber housing (3) on one longitudinal side.

2. Missile according to claim 1, wherein the sealing cover (7, 8) is hinged to the combustion chamber housing (3) by means of a spring hinge (18).

3. Missile according to claim 2, wherein the spring hinge (18) is attached to the combustion chamber housing (3) by means of a bolt (17).

4. Missile according to claim 1, wherein the sealing cover (7, 8) is hinged to the combustion chamber housing (3) by means of a hinge joint (40).

5. Missile according to claim 4, wherein the hinge joint (40) has a joint rod (43) which is attached to the combustion chamber housing (3) and encompassed by channel-shaped sockets (42) on the sealing cover (7, 8) alternately from one side and the other.

6. Missile according to claim 5, wherein the sockets (42) are spaced apart from one another in the longitudinal direction.

7. Missile according to claim 4 or 5, wherein the joint rod (43) is mounted in pivot bearing bolts (44) which are attached to the combustion chamber housing (3).

8. Missile according to claim 4, wherein the hinge joint (40) is configured in the form of a double hinge joint (70, 71).

9. Missile according to claim 8, wherein one hinge joint (70) of the double hinge joint is attached to the combustion chamber housing (3) and connected to the other hinge joint (71), which is attached to the sealing cover (7, 8), by means of a connecting link (78).

10. Missile according to claim 1, wherein the sealing cover (7, 8) with its edge area (20) facing away from the combustion chamber (1) rests on the inside of the combustion chamber housing (3).

11. Missile according to claim 10, wherein the sealing cover (7, 8) rests on a thermal insulation layer (65) of high-temperature resistant material on the inside of the combustion chamber housing (3).

12. Missile according to claim 10 or 11, wherein a frame (15, 16) of high-temperature resistant material on which the sealing cover (7, 8) rests is embedded on the inside of the combustion chamber housing (3) around the air inlet openings (4, 5).

13. Missile according to claims 3 and 12, wherein the frame (15, 16) is secured by the bolts (17) by means of which the spring hinge (18) is attached to the combustion chamber housing (3).

14. Missile according to claim 10, wherein the edge area (20) of the sealing cover (7, 8) tapers towards the air duct (11) in a wedge-shaped manner.

15. Missile according to claim 14, wherein the wedge-shaped edge area (20) rests on the wedge-shaped side walls (22) in a recess (21) of the combustion chamber housing (3).

16. Missile according to claim 10, wherein the sealing cover (7, 8) has a sealing ring (63) with which it rests on the inside of the combustion chamber housing (3).

17. Missile according to claim 1, wherein the sealing cover (7, 8) is configured so as to be arc-shaped in cross section and its radius of contact with the combustion chamber housing (3) rests on a great circle.

18. Missile according to claim 1, wherein the thermal insulation layer (13) on the inside of the combustion chamber housing (3) covers the sealing cover (7, 8) and an actuator is provided which breaks open the insulation layer (13) in the area of the sealing cover (7, 8).

19. Missile according to claims 1 and 18, wherein the actuator acts upon the sealing cover (7, 8) at the end portion facing away from the joint (40).

20. Missile according to claim 19, wherein the actuator is arranged in the area of the webs (6) between the air inlet openings (4, 5).

21. Missile according to claims 18 to 20, wherein the actuator is formed by a breakaway lift cylinder (36).

22. Missile according to claim 1, wherein an actuator is provided for opening the sealing cover (7, 8).

23. Missile according to claim 20, wherein the actuator is provided at the ends of the stripshaped sealing cover (7, 8) on the combustion chamber housing (3).

24. Missile according to claim 22 or 23, wherein the actuator is formed by an opening lift cylinder (38).

25. Missile according to claim 24, wherein the opening lift cylinder (38) with its piston rod (39) acts upon a cam (41) on the sealing cover (7, 8).

26. Missile according to claim 1, wherein tooth-shaped protrusions (77) for severing the thermal insulation layer (13) are provided on the longitudinal side of the sealing cover (7, 8) opposite the hinged longitudinal side.

27. Missile according to claim 1 including a device by means of which the sealing cover (7, 8) is detachably connected to the combustion chamber housing (3) in the closed state.

28. Missile according to claim 27, wherein the device for detachably connecting the sealing cover (7, 8) can be operated pyrotechnically.

29. Missile according to claim 28, wherein the detachable connection is formed by a screw (26) which is severable by a pyrotechnic charge (31).

30. Missile according to claim 29, wherein a piston (32) is guided in the screw (26), which piston can be pushed into an spreadable cutting ring (34) at the tapered end portion (33) facing away from the pyrotechnic charge (31) for severing a tubular portion (30) of the screw (26).

31. Missile according to claim 29 or 30, wherein the screw (26) connects the web (6) between the air inlet openings (4, 5) to the sealing cover (7, 8).

32. Missile according to claim 27, wherein the device for detachably connecting the sealing cover (7, 8) is formed by a detent (53) attached to the sealing cover (7, 8).

33. Missile according to claims 1 and 32, wherein the detent (53) is provided on the longitudinal side of the sealing cover (7, 8) opposite the hinged longitudinal side.

34. Missile according to claim 32 or 33, wherein the detent (53) is spring-loaded in a recess (54) in the combustion chamber housing (3) in the engaged position.

35. Missile according to claim 32, wherein the detent (53) is formed by a bolt (66) attached to the sealing cover (7, 8) which is in engagement with a spring-loaded locking bar (67) movably mounted in the combustion chamber housing (3).

36. Missile according to claim 33, wherein the detent (53) can be operated by means of control rods (57) guided along the longitudinal side of the sealing cover (7, 8) on the combustion chamber housing (3).

37. Missile according to claim 36, wherein the control rods (57) can be operated by means of a working cylinder (62).

38. Missile according to claim 36 or 37, wherein the control rods (57) are guided in at least one bearing part (60) attached to the outside of the combustion chamber housing (3).

39. Missile according to claim 36, wherein the control rods (57) have control cams (61) for operating the detent (53).

40. Missile according claim 36 or 39, wherein the detent (53) can be operated by means of the control rods (57) through a pin (59) which is movably guided in the combustion chamber housing (3).

41. Missile according to claim 33, wherein, the sealing cover (7, 8) has a protrusion (74) on the longitudinal side with which it is hinged, which protrusion is embedded in a groove (75) in the combustion chamber housing (3), wherein the groove wall (76) facing the combustion chamber (1) and the face of the protrusion (74) abutting thereon extend towards the air duct (11) in the direction of the combustion chamber (1).

42. Missile according to 41, wherein the groove wall (76) and the face of the protrusion (74) abutting thereon are curved in an arc-shaped manner, wherein the centre of the circle is located in the area of the double hinge joint.

43. Missile according to claim 32, wherein the detent (53) is provided on a bridge (52) attached to the sealing cover (7, 8).

44. Missile according to claim 43, wherein a plate (83) is provided between the bridge (52) and the sealing cover (7, 8), which plate is pressed against the sealing cover (7, 8) and the combustion chamber housing (3) at the air inlet opening (4, 5) by means of springs (84) resting on the bridge (52).

45. Missile according to any of claims 21, 24 or 37, wherein the breakaway lift cylinder (36), the opening lift cylinder (38) and/or the working cylinder (62) can be operated by pyrotechnically generated gas.

46. Missile according to claim 45 including a common gas generator for the pyrotechnically generated gas.

47. Missile according to claim 11 or 12, wherein the insulation layer (15, 16 and 65) and/or the high-temperature resistant material is made of C/SiC.

## Revendications

1. Missile comprenant un statoréacteur qui comporte une chambre de combustion (1) revêtue sur la face intérieure par une couche isolante (13), dans laquelle une charge propulsive de départ (2) est brûlée au départ et à laquelle est amené pendant le vol de croisière un gaz riche en combustible et de l'air via des canaux d'air (11), les canaux d'air (11) étant pourvus d'un couvercle de fermeture (7, 8) s'ouvrant dans la chambre de combustion (1), au niveau de l'orifice d'admission d'air (4, 5) du boîtier de chambre de combustion (3), dans lequel le boîtier de chambre de combustion (3) présente des orifices d'admission d'air (4, 5) agencés les uns derrière les autres et séparés par des entretoises (6), lesquels peuvent être fermés par un couvercle de fermeture (7, 8) commun réalisés sous forme de barre, et il est prévu deux ou plusieurs rangées (I, II) d'orifices d'admission d'air (4, 5) agencés les unes derrière les autres, et le couvercle de fermeture (7, 8) est articulé sur un côté longitudinal sur le boîtier de chambre de combustion (3).

2. Missile selon la revendication 1, dans lequel le couvercle de fermeture (7, 8) est articulé sur le boîtier de chambre de combustion (3) avec un ressort à bande (18).

3. Missile selon la revendication 2, dans lequel le ressort à bande (18) est fixé par un boulon (17) sur le boîtier de chambre de combustion (3).

4. Missile selon la revendication 1, dans lequel le couvercle de fermeture (7, 8) est articulé par une articulation rotative (40) sur le boîtier de chambre de combustion (3).

5. Missile selon la revendication 4, dans lequel l'articulation rotative (40) présente une tige articulée (43) qui est fixée au boîtier de chambre de combustion (3) et qui est entourée alternativement sur un côté et sur l'autre par des coussinets à rotule (42) de forme annulaire sur le couvercle de fermeture (7, 8).

6. Missile selon la revendication 5, dans lequel les coussinets à rotule (42) sont agencés à distance les unes des autres en direction longitudinale.

7. Missile selon la revendication 4 ou 5, dans lequel la tige articulée (43) est montée dans des goujons de palier rotatif (44) qui sont fixés sur le boîtier de chambre de combustion (3).

8. Missile selon la revendication 4, dans lequel l'articulation rotative (40) est réalisée sous forme de double articulation rotative (70, 71).

9. Missile selon la revendication 8, dans lequel une des articulations rotatives (70) de la double articulation rotative est fixée sur le boîtier de chambre de combustion (3) et reliée par un organe de liaison (78) avec l'autre articulation rotative (71) fixée sur le couvercle de fermeture (7, 8).

10. Missile selon la revendication 1, dans lequel le couvercle de fermeture (7, 8) prend appui sur la face intérieure du boîtier de chambre de combustion (3) avec sa zone de bord (20) détournée de la chambre de combustion (1).

11. Missile selon la revendication 10, dans lequel le couvercle de fermeture (7, 8) repose sur une couche isolante (65) thermique en matériau résistant à hautes températures sur la face intérieure du boîtier de chambre de combustion (3).

12. Missile selon la revendication 10 ou 11, dans lequel sur la face intérieure du boîtier de chambre de combustion (3), autour des orifices d'admission d'air (4, 5), est inséré un cadre (15, 16) en matériau résistant aux hautes températures sur lequel repose le couvercle de fermeture (7, 8).

13. Missile selon la revendication 3 et 12, dans lequel le cadre (15, 16) est fixé avec les boulons (17) avec lesquels le ressort à bande (18) est fixé sur le boîtier de chambre de combustion (3).

14. Missile selon la revendication 10, dans lequel la zone de bord (20) du couvercle de fermeture (7, 8) se rétrécit en forme de coin vers le canal d'air (11).

15. Missile selon la revendication 14, dans lequel la zone de bord (20) en forme de coin prend appui sur les parois latérales (22) en forme de coins dans un évidement (21) du boîtier de chambre de combustion (3).

16. Missile selon la revendication 10, dans lequel le couvercle de fermeture (7, 8) présente un joint d'étanchéité (63) avec lequel il repose sur la face intérieure du boîtier de chambre de combustion (3).

17. Missile selon la revendication 1, dans lequel le couvercle de fermeture (7, 8) est réalisé avec une section transversale en forme d'arc de cercle, et son rayon d'appui avec le boîtier de chambre de combustion (3) est situé dans un grand cercle.

18. Missile selon la revendication 1, dans lequel la couche isolante (13) thermique sur la face intérieure du boîtier de chambre de combustion (3) recouvre le couvercle de fermeture (7, 8), et il est prévu un actionneur qui défonce la couche isolante (13) dans la zone du couvercle de fermeture (7, 8).

19. Missile selon la revendication 1 et 18, dans lequel l'actionneur attaque le couvercle de fermeture (7, 8) au niveau du tronçon d'extrémité détourné de l'articulation (40).

20. Missile selon la revendication 19, dans lequel l'actionneur est agencé dans la région des entretoises (6) entre les orifices d'admission d'air (4, 5).

21. Missile selon les revendications 18 à 20, dans lequel l'actionneur est formé par un vérin de levage de décollement (36).

22. Missile selon la revendication 1, dans lequel il est prévu un actionneur pour ouvrir le couvercle de fermeture (7, 8).

23. Missile selon la revendication 20, dans lequel l'actionneur est prévu sur le boîtier de chambre de combustion (3) aux extrémités du couvercle de fermeture (7, 8) en forme de barre.

24. Missile selon la revendication 22 ou 23, dans lequel l'actionneur est formé par un vérin de levage d'ouverture (38).

25. Missile selon la revendication 24, dans lequel le vérin de levage d'ouverture (38) attaque une came (41) sur le couvercle de fermeture (7, 8) au moyen de sa tige de piston (39).

26. Missile selon la revendication 1, dans lequel sur le côté longitudinal du couvercle de fermeture (7, 8), qui est opposé au côté longitudinal articulé, sont prévues des saillies (77) en forme de dents pour sectionner la couche isolante (13) thermique.

27. Missile selon la revendication 1, comportant_un dispositif avec lequel à l'état fermé, le couvercle de fermeture (7, 8) est relié de manière détachable avec le boîtier de chambre de combustion (3).

28. Missile selon la revendication 27, dans lequel le dispositif destiné à relier de manière détachable le couvercle de fermeture (7, 8) peut être actionné par la voie pyrotechnique.

29. Missile selon la revendication 28, dans lequel la liaison détachable est formée par une vis (26) qui peut être sectionnée avec une charge pyrotechnique (31).

30. Missile selon la revendication 29, dans lequel un piston (32) est guidé dans la vis (26), lequel peut être pressé, sur son tronçon d'extrémité (33) détourné de la charge pyrotechnique (31), dans une bague coupante (34) expansible pour sectionner un tronçon tubulaire (30) de la vis (26).

31. Missile selon la revendication 29 ou 30, dans lequel la vis (26) relie l'entretoise (6) entre les orifices d'admission d'air (4, 5) avec le couvercle de fermeture (7, 8).

32. Missile selon la revendication 27, dans lequel le dispositif destiné à relier de manière détachable le couvercle de fermeture (7, 8) est formé par un cliquet (53) fixé sur le couvercle de fermeture (7, 8).

33. Missile selon les revendications 1 et 32, dans lequel le cliquet (53) est prévu sur le côté longitudinal du couvercle de fermeture (7, 8) opposé au côté longitudinal articulé.

34. Missile selon la revendication 32 ou 33, dans lequel le cliquet (53) est sollicité par ressort en position d'engagement dans un évidement (54) dans le boîtier de chambre de combustion (3).

35. Missile selon la revendication 32, dans lequel le cliquet (53) est formé par un boulon (66) fixé sur le couvercle de fermeture (7, 8), lequel est en engagement avec un loquet (67) sollicité par ressort et monté de manière déplaçable dans le boîtier de chambre de combustion (3).

36. Missile selon la revendication 33, dans lequel le cliquet (53) peut être actionné par une tringlerie de commande (57) guidée le long du côté longitudinal du couvercle de fermeture (7, 8) sur le boîtier de chambre de combustion (3).

37. Missile selon la revendication 36, dans lequel la tringlerie de commande (57) peut être actionnée par un cylindre de travail (62).

38. Missile selon la revendication 36 ou 37, dans lequel la tringlerie de commande (57) est guidée dans au moins une partie de palier (60) fixée sur la face extérieure du boîtier de chambre de combustion (3).

39. Missile selon la revendication 36, dans lequel la tringlerie de commande (57) présente des cames de commande (61) pour actionner le cliquet (53).

40. Missile selon la revendication 36 ou 39, dans lequel le cliquet (53) peut être actionné par la tringlerie de commande (57) par l'intermédiaire d'une goupille (59) guidée de manière déplaçable dans le boîtier de chambre de combustion (3).

41. Missile selon la revendication 33, dans lequel le couvercle de fermeture (7, 8) présente, sur le côté longitudinal par lequel il est articulé, une saillie (74) qui est logée dans une gorge (75) dans le boîtier de chambre de combustion (3), la paroi de gorge (76) qui est tournée vers la chambre de combustion (1) et la surface de la saillie (74) qui est adjacente à celle-ci s'étendant vers le canal d'air (11) en direction de la chambre de combustion (1).

42. Missile selon la revendication 41, dans lequel paroi de gorge (76) et la surface de la saillie (74) qui est adjacente à celle-ci sont recourbées en forme d'arc de cercle, le centre du cercle étant situé dans la zone de l'articulation rotative.

43. Missile selon la revendication 32, dans lequel le cliquet (53) est prévu sur un pont (52) fixé sur le couvercle de fermeture (7, 8).

44. Missile selon la revendication 43, dans lequel il est prévu entre le pont (52) et le couvercle de fermeture (7, 8) une plaque (83) qui est pressée par des ressorts (84) prenant appui sur le pont (52) contre le couvercle de fermeture (7, 8) et le boîtier de chambre de combustion (3) au niveau de l'orifice d'admission d'air (4, 5).

45. Missile selon la revendication 21, 24 ou 37, dans lequel le vérin de levage de décollement (36), le vérin de levage d'ouverture (38) et/ou le cylindre de travail (62) peuvent être actionnés avec un gaz engendré par la voie pyrotechnique.

46. Missile selon la revendication 45, comprenant un gazogène commun pour le gaz engendré par la voie pyrotechnique.

47. Missile selon la revendication 11 ou 12, dans lequel la couche isolante (15, 16 et 65) et/ou le matériau résistant aux hautes températures est en SiC de type C.
